# EUROPEAN PATENT APPLICATION

(11) **EP 4 311 117 A1**
(43) Date of publication of application: **24.01.2024**
(21) Application number: 23186398.6
(22) Date of filing: 19.07.2023
(51) Int. Cl.: H04B 1/719

(54) **SYSTEMS AND METHODS FOR ULTRA-WIDEBAND FREQUENCY BAND ALLOCATION**

(30) Priority: 22.07.2022 US 202263391593 P; 10.07.2023 US 202318219984
(71) Applicant: Meta Platforms Technologies, LLC, Menlo Park, CA 94025 (US)
(72) Inventor: DE SILVA, Claudio Rafael Cunha Monteiro, Menlo Park (US); YOON, Kangjin, Menlo Park (US); HU, Chunyu, Menlo Park (US); NORMAN, Alan David, Menlo Park (US); ALDANA, Carlos Horacio, Menlo Park (US); LEBRUN, Guillaume, Menlo Park (US)
(74) Representative: Murgitroyd & Company

(57) **Abstract**

Systems, methods, and devices for ultra-wideband frequency band allocation may include a first ultra-wideband (UWB) device that establishes a connection with a second UWB device on a channel. The channel may have a center frequency at or above 10.6 gigahertz (GHz). The first UWB device may transmit a signal to the second UWB device via the connection on the channel.

## Description

### CROSS-REFERENCE TO RELATED APPLICATIONS

This application claims the benefit of and priority to U.S. Provisional Patent Application No. 63/391,593, filed July 22, 2022, the contents of which are incorporated herein by reference in their entirety.

### FIELD OF INVENTION

This disclosure relates to artificial reality such as virtual reality (VR), augmented reality (AR), or mixed reality (MR). In particular, the disclosure is directed to channelization to support potential UWB band expansion.

### BACKGROUND

Artificial reality such as virtual reality (VR), augmented reality (AR), or mixed reality (MR) provides immersive experience to a user. Typically, in systems and methods which implement or otherwise provide immersive experiences, such systems utilize Wi-Fi, Bluetooth, or Radio wireless links to transmit / receive data. However, using such wireless links typically requires detailed coordination between links, particularly where multiple devices in the same environment are utilizing the same wireless link technology for communications.

UWB channels can be configured to have a channel width or bandwidth of 500 MHz (i.e., 499.2 MHz). While other bandwidths are available, this bandwidth may be preferred or adopted for use by devices. In accordance with the present solutions, some approaches for consideration include expanding the UWB spectrum beyond 10.6 GHz (e.g., from 10.7 GHz to 12.4 GHz, to 12.7 GHz, or to 13.2 GHz). Additionally, in some locations, a spectrum between 10.6 - 10.7 GHz may be set for research purposes and is unusable. As such, devices operating around this spectrum would need to have a signal drop-off (i.e., in dB) sufficient so as to not interfere with that spectrum.

### SUMMARY

In various aspects, this disclosure is directed to systems, methods, and devices for ultra-wideband frequency band allocation. A first ultra-wideband (UWB) device may establish a connection with a second UWB device on a channel. The channel may have a center frequency at or above 10.6 gigahertz (GHz). The first UWB device may transmit a signal to the second UWB device via the connection on the channel.

In some embodiments, the first UWB device may select, from a plurality of channels with center frequencies between 10.6 GHz and 13.0 GHz, the channel upon which to establish the connection. In some embodiments, the plurality of channels may include a first channel having a first center frequency at 11,107.2 megahertz (MHz), a second channel having a second center frequency at 11,606.4 MHz, a third channel having a third center frequency at 12,105.6 MHz, and a fourth channel having a fourth center frequency at 12,604.8 MHz. In some embodiments, selecting the channel from the plurality of channels may include the first UWB device selecting the channel upon which to establish the connection from any of the first channel through the fourth channel.

In some embodiments, the plurality of channels include a first channel having a first center frequency at 10,483.2 megahertz (MHz), a second channel having a second center frequency at 10,982.4 MHz, a third channel having a third center frequency at 11,481.6 MHz, a fourth channel having a fourth center frequency at 11,980.8 MHz, a fifth channel having a fifth center frequency at 12,490.0 MHz, and a sixth channel having a sixth center frequency at 12,979.2 MHz. In some embodiments, selecting the channel from the plurality of channels may include the first UWB device selecting the channel upon which to establish the connection from any of the third channel through the sixth channel. In some embodiments, a passive band resides within the first channel such that the first channel is inaccessible for establishing a connection thereon. In some embodiments, the first UWB device may select the second channel according to one or more filters of the first UWB device attenuating signals sent on the second channel to below a threshold at the passive band. In some embodiments, each channel of the plurality of channels has a channel width, between respective start frequencies and end frequencies, of 499.2 megahertz.

For example, in a first aspect of the invention, a method comprises:
establishing, by a first ultra-wideband (UWB) device, a connection with a second UWB device on a channel, the channel having a center frequency at or above 10.6 gigahertz (GHz); and
transmitting, by the first UWB device, a signal to the second UWB device via the connection on the channel.

In some embodiments, the method further comprises selecting, by the first UWB device, from a plurality of channels with center frequencies between 10.6 GHz and 13.0 GHz, the channel upon which to establish the connection.

In some embodiments, the plurality of channels comprise at least one of:
a first channel having a first center frequency at 11,107.2 megahertz (MHz),
a second channel having a second center frequency at 11,606.4 MHz,
a third channel having a third center frequency at 12,105.6 MHz, or
a fourth channel having a fourth center frequency at 12,604.8 MHz.

In some embodiments, selecting the channel from the plurality of channels comprises selecting, by the first UWB device, the first channel, the second channel, the third channel or the fourth channel.

In some embodiments, the plurality of channels comprise at least one of:
a first channel having a first center frequency at 10,483.2 megahertz (MHz),
a second channel having a second center frequency at 10,982.4 MHz,
a third channel having a third center frequency at 11,481.6 MHz,
a fourth channel having a fourth center frequency at 11,980.8 MHz,
a fifth channel having a fifth center frequency at 12,490.0 MHz, and
a sixth channel having a sixth center frequency at 12,979.2 MHz.

In some embodiments, selecting the channel from the plurality of channels comprises selecting, by the first UWB device, the second channel, the third channel, the fourth channel, the fifth channel or the sixth channel.

In some embodiments, a passive band resides within the first channel such that the first channel is inaccessible for establishing a connection thereon.

In some embodiments, the method further comprises selecting, by the first UWB device, the second channel according to the first UWB device attenuating signals sent on the second channel, to below a threshold at the passive band.

In some embodiments, wherein each channel of the plurality of channels has a channel width, between a respective pair of start and end frequencies, of 499.2 megahertz.

For example, in a first aspect of the invention, an ultra-wideband (UWB) device comprises:
one or more UWB transceivers configured to:
establish a connection with a second UWB device on a channel, the channel having a center frequency at or above 10.6 gigahertz (GHz); and
transmit a signal to the second UWB device via the connection on the channel.

In some embodiments, the one or more UWB transceivers are configured to select, from a plurality of channels with center frequencies between 10.6 GHz and 13.0 GHz, the channel upon which to establish the connection.

In some embodiments, the plurality of channels comprise at least one of:
a first channel having a first center frequency at 11,107.2 megahertz (MHz),
a second channel having a second center frequency at 11,606.4 MHz,
a third channel having a third center frequency at 12,105.6 MHz, or
a fourth channel having a fourth center frequency at 12,604.8 MHz.

In some embodiments, the UWB transceiver is configured to select the channel by selecting the first channel, the second channel, the third channel or the fourth channel.

In some embodiments, the plurality of channels comprise at least one of:
a first channel having a first center frequency at 10,483.2 megahertz (MHz),
a second channel having a second center frequency at 10,982.4 MHz,
a third channel having a third center frequency at 11,481.6 MHz,
a fourth channel having a fourth center frequency at 11,980.8 MHz,
a fifth channel having a fifth center frequency at 12,490.0 MHz, or
a sixth channel having a sixth center frequency at 12,979.2 MHz.

In some embodiments, the UWB transceiver is configured to select the channel by selecting the second channel, the third channel, the fourth channel, the fifth channel or sixth channel.

In some embodiments, a passive band resides within the first channel such that the first channel is inaccessible for establishing a connection thereon.

In some embodiments, the UWB transceiver is configured to select the second channel according to one or more filters of the first UWB device attenuating signals sent on the second channel to below a threshold at the passive band.

In some embodiments, each channel of the plurality of channels has a channel width, between a respective pair of start and end frequencies, of 499.2 megahertz.

For example, in a third aspect of the invention, a device comprises:
a first ultra-wideband (UWB) transceiver configured to:
establish a connection with a second UWB transceiver of a second device on a channel, the channel having a center frequency at or above 10.6 gigahertz (GHz); and
transmit a signal to the second UWB transceiver via the connection on the channel.

The first UWB transceiver may be configured to select, from a plurality of channels with center frequencies between 10.6 GHz and 13.0 GHz, the channel upon which to establish the connection.

### BRIEF DESCRIPTION OF THE DRAWINGS

The accompanying drawings are not intended to be drawn to scale. Like reference numbers and designations in the various drawings indicate like elements. For purposes of clarity, not every component can be labeled in every drawing.
FIG. 1 is a diagram of a system environment including an artificial reality system, according to an example implementation of the present disclosure.
FIG. 2 is a diagram of a head wearable display, according to an example implementation of the present disclosure.
FIG. 3 is a block diagram of an artificial reality environment, according to an example implementation of the present disclosure.
FIG. 4 is a block diagram of another artificial reality environment, according to an example implementation of the present disclosure.
FIG. 5 is a block diagram of another artificial reality environment, according to an example implementation of the present disclosure.
FIG. 6 is a block diagram of a system for ultra-wideband (UWB) frequency band allocation, according to an example implementation of the present disclosure.
FIG. 7 is a table showing example channels in the UWB spectrum, according to an example implementation of the present disclosure.
FIGS. 8A - 8B are channel diagrams corresponding to the table of FIG. 7, according to an example implementation of the present disclosure.
FIG. 9 is another table showing example channels in the UWB spectrum, according to another example implementation of the present disclosure.
FIG. 10 is a channel diagram corresponding to the table of FIG. 9, according to an example implementation of the present disclosure.
FIG. 11 is a flowchart showing an example method of UWB frequency band allocation, according to an example implementation of the present disclosure.
FIG. 12 is a block diagram of a computing environment according to an example implementation of the present disclosure.

### DETAILED DESCRIPTION

Before turning to the figures, which illustrate certain embodiments in detail, it should be understood that the present disclosure is not limited to the details or methodology set forth in the description or illustrated in the figures. It should also be understood that the terminology used herein is for the purpose of description only and should not be regarded as limiting.

This disclosure is directed to channelization to support potential UWB band expansion. UWB typically operates in the 3.1 - 10.6 GHz spectrum, depending on the location and local administrations / regulations. UWB channels can be configured to have a channel width or bandwidth of 500 MHz (i.e., 499.2 MHz). While other bandwidths are available, this bandwidth may be preferred or adopted for use by devices. In accordance with the present solutions, some approaches for consideration include expanding the UWB spectrum beyond 10.6 GHz (e.g., from 10.7 GHz to 12.4 GHz, to 12.7 GHz, or to 13.2 GHz). Additionally, in some locations, a spectrum between 10.6 - 10.7 GHz may be set for research purposes and is unusable. As such, devices operating around this spectrum would need to have a signal drop-off (i.e., in dB) sufficient so as to not interfere with that spectrum.

As part of expanding the UWB spectrum, this application is directed to defining additional channels and operating frequencies, along with UWB physical layer (PHY) parameters which may be rate dependent and parameters for devices to operate outside of the current spectrum. This application presents at least two solutions. Both options relate to establishing new bands outside of the current UWB spectrum. The first option may include adding six new channels with 499.2 MHz bandwidths. Two of those channels, however, may not be able to be used due to the 10.6-10.7 GHz band being unusable. The second option may include adding four channels with a multiple (1.25) for the first new band, to protect the unusable 10.6-10.7 GHz band. However, the remaining bands added may have the same 499.2 MHz bandwidth. Both solutions can use similar or same parameters (i.e., modulation and coding rates, data symbol structures, and data rates) for using the new channels as those previously used for the current spectrum. Similarly, the preambles and PHY frame-dependent parameters may be used in (or adapted from) standards provided by various standard-setting bodies. This provides ease of implementation by applying the defined parameters for the new channels, which also decreases complexity in adoption by devices.

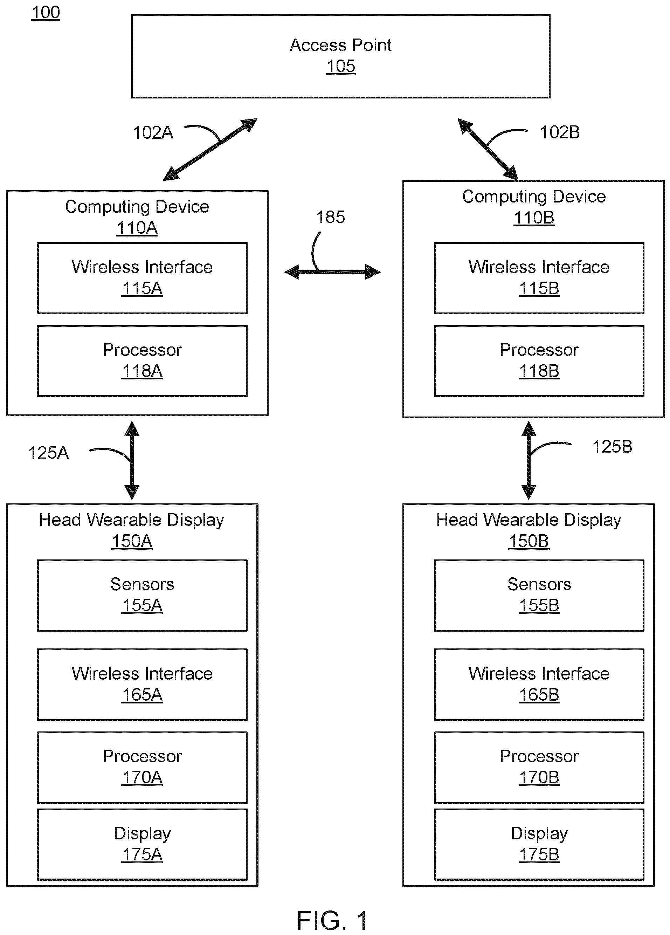

FIG. 1 is a block diagram of an example artificial reality system environment 100. In some embodiments, the artificial reality system environment 100 includes an access point (AP) 105, one or more HWDs 150 (e.g., HWD 150A, 150B), and one or more computing devices 110 (computing devices 110A, 110B; sometimes referred to as stage devices or consoles) providing data for artificial reality to the one or more HWDs 150. The access point 105 may be a router or any network device allowing one or more computing devices 110 and/or one or more HWDs 150 to access a network (e.g., the Internet). The access point 105 may be replaced by any communication device (cell site). A computing device 110 may be a custom device or a mobile device that can retrieve content from the access point 105, and provide image data of artificial reality to a corresponding HWD 150. Each HWD 150 may present the image of the artificial reality to a user according to the image data. In some embodiments, the artificial reality system environment 100 includes more, fewer, or different components than shown in FIG. 1. In some embodiments, the computing devices 110A, 110B communicate with the access point 105 through wireless links 102A, 102B (e.g., interlinks), respectively. In some embodiments, the computing device 110A communicates with the HWD 150A through a wireless link 125A (e.g., intralink), and the computing device 110B communicates with the HWD 150B through a wireless link 125B (e.g., intralink). In some embodiments, functionality of one or more components of the artificial reality system environment 100 can be distributed among the components in a different manner than is described here. For example, some of the functionality of the computing device 110 may be performed by the HWD 150. For example, some of the functionality of the HWD 150 may be performed by the computing device 110.

In some embodiments, the HWD 150 is an electronic component that can be worn by a user and can present or provide an artificial reality experience to the user. The HWD 150 may be referred to as, include, or be part of a head mounted display (HMD), head mounted device (HMD), head wearable device (HWD), head worn display (HWD) or head worn device (HWD). The HWD 150 may render one or more images, video, audio, or some combination thereof to provide the artificial reality experience to the user. In some embodiments, audio is presented via an external device (e.g., speakers and/or headphones) that receives audio information from the HWD 150, the computing device 110, or both, and presents audio based on the audio information. In some embodiments, the HWD 150 includes sensors 155, a wireless interface 165, a processor 170, and a display 175. These components may operate together to detect a location of the HWD 150 and a gaze direction of the user wearing the HWD 150, and render an image of a view within the artificial reality corresponding to the detected location and/or orientation of the HWD 150. In other embodiments, the HWD 150 includes more, fewer, or different components than shown in FIG. 1.

In some embodiments, the sensors 155 include electronic components or a combination of electronic components and software components that detects a location and an orientation of the HWD 150. Examples of the sensors 155 can include: one or more imaging sensors, one or more accelerometers, one or more gyroscopes, one or more magnetometers, or another suitable type of sensor that detects motion and/or location. For example, one or more accelerometers can measure translational movement (e.g., forward/back, up/down, left/right) and one or more gyroscopes can measure rotational movement (e.g., pitch, yaw, roll). In some embodiments, the sensors 155 detect the translational movement and the rotational movement, and determine an orientation and location of the HWD 150. In one aspect, the sensors 155 can detect the translational movement and the rotational movement with respect to a previous orientation and location of the HWD 150, and determine a new orientation and/or location of the HWD 150 by accumulating or integrating the detected translational movement and/or the rotational movement. Assuming for an example that the HWD 150 is oriented in a direction 25 degrees from a reference direction, in response to detecting that the HWD 150 has rotated 20 degrees, the sensors 155 may determine that the HWD 150 now faces or is oriented in a direction 45 degrees from the reference direction. Assuming for another example that the HWD 150 was located two feet away from a reference point in a first direction, in response to detecting that the HWD 150 has moved three feet in a second direction, the sensors 155 may determine that the HWD 150 is now located at a vector multiplication of the two feet in the first direction and the three feet in the second direction.

In some embodiments, the wireless interface 165 includes an electronic component or a combination of an electronic component and a software component that communicates with the computing device 110. In some embodiments, the wireless interface 165 includes or is embodied as a transceiver for transmitting and receiving data through a wireless medium. The wireless interface 165 may communicate with a wireless interface 115 of a corresponding computing device 110 through a wireless link 125 (e.g., intralink). The wireless interface 165 may also communicate with the access point 105 through a wireless link (e.g., interlink). Examples of the wireless link 125 include a near field communication link, Wi-Fi direct, Bluetooth, or any wireless communication link. In some embodiments, the wireless link 125 may include one or more ultra-wideband communication links, as described in greater detail below. Through the wireless link 125, the wireless interface 165 may transmit to the computing device 110 data indicating the determined location and/or orientation of the HWD 150, the determined gaze direction of the user, and/or hand tracking measurement. Moreover, through the wireless link 125, the wireless interface 165 may receive from the computing device 110 image data indicating or corresponding to an image to be rendered.

In some embodiments, the processor 170 includes an electronic component or a combination of an electronic component and a software component that generates one or more images for display, for example, according to a change in view of the space of the artificial reality. In some embodiments, the processor 170 is implemented as one or more graphical processing units (GPUs), one or more central processing unit (CPUs), or a combination of them that can execute instructions to perform various functions described herein. The processor 170 may receive, through the wireless interface 165, image data describing an image of artificial reality to be rendered, and render the image through the display 175. In some embodiments, the image data from the computing device 110 may be encoded, and the processor 170 may decode the image data to render the image. In some embodiments, the processor 170 receives, from the computing device 110 through the wireless interface 165, object information indicating virtual objects in the artificial reality space and depth information indicating depth (or distances from the HWD 150) of the virtual objects. In one aspect, according to the image of the artificial reality, object information, depth information from the computing device 110, and/or updated sensor measurements from the sensors 155, the processor 170 may perform shading, reprojection, and/or blending to update the image of the artificial reality to correspond to the updated location and/or orientation of the HWD 150.

In some embodiments, the display 175 is an electronic component that displays an image. The display 175 may, for example, be a liquid crystal display or an organic light emitting diode display. The display 175 may be a transparent display that allows the user to see through. In some embodiments, when the HWD 150 is worn by a user, the display 175 is located proximate (e.g., less than 3 inches) to the user's eyes. In one aspect, the display 175 emits or projects light towards the user's eyes according to image generated by the processor 170. The HWD 150 may include a lens that allows the user to see the display 175 in a close proximity.

In some embodiments, the processor 170 performs compensation to compensate for any distortions or aberrations. In one aspect, the lens introduces optical aberrations such as a chromatic aberration, a pin-cushion distortion, barrel distortion, etc. The processor 170 may determine a compensation (e.g., predistortion) to apply to the image to be rendered to compensate for the distortions caused by the lens, and apply the determined compensation to the image from the processor 170. The processor 170 may provide the predistorted image to the display 175.

In some embodiments, the computing device 110 is an electronic component or a combination of an electronic component and a software component that provides content to be rendered to the HWD 150. The computing device 110 may be embodied as a mobile device (e.g., smart phone, tablet PC, laptop, etc.). The computing device 110 may operate as a soft access point. In one aspect, the computing device 110 includes a wireless interface 115 and a processor 118. These components may operate together to determine a view (e.g., a FOV of the user) of the artificial reality corresponding to the location of the HWD 150 and the gaze direction of the user of the HWD 150, and can generate image data indicating an image of the artificial reality corresponding to the determined view. The computing device 110 may also communicate with the access point 105, and may obtain AR/VR content from the access point 105, for example, through the wireless link 102 (e.g., interlink). The computing device 110 may receive sensor measurement indicating location and the gaze direction of the user of the HWD 150 and provide the image data to the HWD 150 for presentation of the artificial reality, for example, through the wireless link 125 (e.g., intralink). In other embodiments, the computing device 110 includes more, fewer, or different components than shown in FIG. 1.

In some embodiments, the wireless interface 115 is an electronic component or a combination of an electronic component and a software component that communicates with the HWD 150, the access point 105, other computing device 110, or any combination of them. In some embodiments, the wireless interface 115 includes or is embodied as a transceiver for transmitting and receiving data through a wireless medium. The wireless interface 115 may be a counterpart component to the wireless interface 165 to communicate with the HWD 150 through a wireless link 125 (e.g., intralink). The wireless interface 115 may also include a component to communicate with the access point 105 through a wireless link 102 (e.g., interlink). Examples of wireless link 102 include a cellular communication link, a near field communication link, Wi-Fi, Bluetooth, 60 GHz wireless link, ultra-wideband link, or any wireless communication link. The wireless interface 115 may also include a component to communicate with a different computing device 110 through a wireless link 185. Examples of the wireless link 185 include a near field communication link, Wi-Fi direct, Bluetooth, ultra-wideband link, or any wireless communication link. Through the wireless link 102 (e.g., interlink), the wireless interface 115 may obtain AR/VR content, or other content from the access point 105. Through the wireless link 125 (e.g., intralink), the wireless interface 115 may receive from the HWD 150 data indicating the determined location and/or orientation of the HWD 150, the determined gaze direction of the user, and/or the hand tracking measurement. Moreover, through the wireless link 125 (e.g., intralink), the wireless interface 115 may transmit to the HWD 150 image data describing an image to be rendered. Through the wireless link 185, the wireless interface 115 may receive or transmit information indicating the wireless link 125 (e.g., channel, timing) between the computing device 110 and the HWD 150. According to the information indicating the wireless link 125, computing devices 110 may coordinate or schedule operations to avoid interference or collisions.

The processor 118 can include or correspond to a component that generates content to be rendered according to the location and/or orientation of the HWD 150. In some embodiments, the processor 118 includes or is embodied as one or more central processing units, graphics processing units, image processors, or any processors for generating images of the artificial reality. In some embodiments, the processor 118 may incorporate the gaze direction of the user of the HWD 150 and a user interaction in the artificial reality to generate the content to be rendered. In one aspect, the processor 118 determines a view of the artificial reality according to the location and/or orientation of the HWD 150. For example, the processor 118 maps the location of the HWD 150 in a physical space to a location within an artificial reality space, and determines a view of the artificial reality space along a direction corresponding to the mapped orientation from the mapped location in the artificial reality space. The processor 118 may generate image data describing an image of the determined view of the artificial reality space, and transmit the image data to the HWD 150 through the wireless interface 115. The processor 118 may encode the image data describing the image, and can transmit the encoded data to the HWD 150. In some embodiments, the processor 118 generates and provides the image data to the HWD 150 periodically (e.g., every 11 ms or 16 ms).

In some embodiments, the processors 118, 170 may configure or cause the wireless interfaces 115, 165 to toggle, transition, cycle or switch between a sleep mode and a wake up mode. In the wake up mode, the processor 118 may enable the wireless interface 115 and the processor 170 may enable the wireless interface 165, such that the wireless interfaces 115, 165 may exchange data. In the sleep mode, the processor 118 may disable (e.g., implement low power operation in) the wireless interface 115 and the processor 170 may disable the wireless interface 165, such that the wireless interfaces 115, 165 may not consume power or may reduce power consumption. The processors 118, 170 may schedule the wireless interfaces 115, 165 to switch between the sleep mode and the wake up mode periodically every frame time (e.g., 11 ms or 16 ms). For example, the wireless interfaces 115, 165 may operate in the wake up mode for 2 ms of the frame time, and the wireless interfaces 115, 165 may operate in the sleep mode for the remainder (e.g., 9 ms) of the frame time. By disabling the wireless interfaces 115, 165 in the sleep mode, power consumption of the computing device 110 and the HWD 150 can be reduced.

In various embodiments, the devices in the environments described above may operate or otherwise use components which leverage communications in the ultra-wideband (UWB) spectrum. In various embodiments, UWB devices operate in the 3-10 GHz unlicensed spectrum using 500+ MHz channels which may require low power for transmission. For example, the transmit power spectral density (PSD) for some systems may be limited to -41.3 dBm/MHz. On the other hand, UWB may have transmit PSD values in the range of -5 to +5 dBm/MHz range, averaged over 1 ms, with a peak power limit of 0 dBm in a given 50 MHz band. Using simple modulation and spread spectrum, UWB devices may achieve reasonable resistance to Wi-Fi and Bluetooth interference (as well as resistance to interference with other UWB devices located in the environment) for very low data rates (e.g., 10s to 100s Kbps) and may have large processing gains. However, for higher data rates (e.g., several Mbps), the processing gains may not be sufficient to overcome co-channel interference from Wi-Fi or Bluetooth. According to the embodiments described herein, the systems and methods described herein may operate in frequency bands that do not overlap with Wi-Fi and Bluetooth, but may have good global availability based on regulatory requirements. Since regulatory requirements make the 7-8 GHz spectrum the most widely available globally (and Wi-Fi is not present in this spectrum), the 7-8 GHz spectrum may operate satisfactory both based on co-channel interference and processing gains.

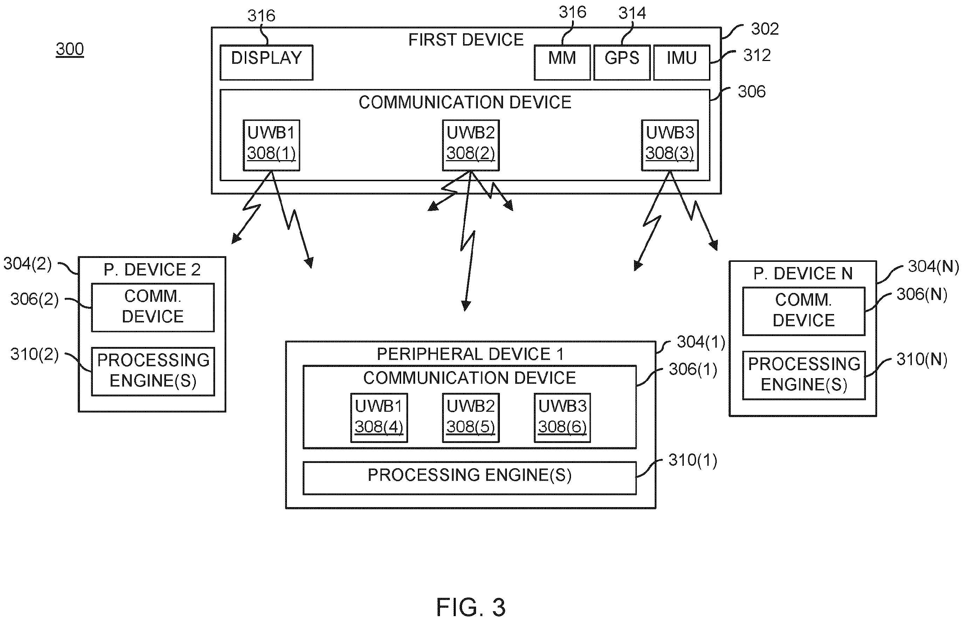

Some implementations of UWB may focus on precision ranging, security, and for low-to-moderate rate data communication. As UWB employs relatively simple modulation, it may be implemented at low cost and low power consumption. In AR/VR applications (or in other applications and use cases), link budget calculations for an AR/VR controller link indicate that the systems and methods described herein may be configured for effective data throughput ranging from ~2 to 31 Mbps (e.g., with 31 Mbps being the maximum possible rate in the latest 802.15.4z standard), which may depend on body loss assumptions Referring now to FIG. 3, depicted is a block diagram of an artificial reality environment 300. The artificial reality environment 300 is shown to include a first device 302 and one or more peripheral devices 304(1) - 304(N) (also referred to as "peripheral device 304" or "device 304"). The first device 302 and peripheral device(s) 304 may each include a communication device 306 including a plurality of UWB devices 308. A set of UWB devices 308 may be spatially positioned/located (e.g., spaced out) relative to each other on different locations on/in the first device 302 or the peripheral device 304, so as to maximize UWB coverage and/or to enhance/enable specific functionalities. The UWB devices 308 may be or include antennas, sensors, or other devices and components designed or implemented to transmit and receive data or signals in the UWB spectrum (e.g., between 3.1 GHz and 10.6 GHz) and/or using UWB communication protocol. In some embodiments, one or more of the devices 302, 304 may include various processing engines 310. The processing engines 310 may be or include any device, component, machine, or other combination of hardware and software designed or implemented to control the devices 302, 304 based on UWB signals transmitted and/or received by the respective UWB devices 308.

As noted above, the environment 300 may include a first device 302. The first device 302 may be or include a wearable device, such as the HWD 150 described above, a smart watch, AR glasses, or the like. In some embodiments, the first device 302 may include a mobile device (e.g., a smart phone, tablet, stage/console device, or other computing device). The first device 302 may be communicably coupled with various other devices 304 located in the environment 300. For example, the first device 302 may be communicably coupled to one or more of the peripheral devices 304 located in the environment 300. The peripheral devices 304 may be or include the computing device 110 described above, a device similar to the first device 302 (e.g., a HWD 150, a smart watch, mobile device, etc.), an automobile or other vehicle, a beacon transmitting device located in the environment 300, a smart home device (e.g., a smart television, a digital assistant device, a smart speaker, etc.), a smart tag configured for positioning on various devices, etc. In some embodiments, the first device 302 may be associated with a first entity or user and the peripheral devices 304 may be associated with a second entity or user (e.g., a separate member of a household, or a person / entity unrelated to the first entity).

In some embodiments, the first device 302 may be communicably coupled with the peripheral device(s) 304 following a pairing or handshaking process. For example, the first device 302 may be configured to exchange handshake packet(s) with the peripheral device(s) 304, to pair (e.g., establish a specific or dedicated connection or link between) the first device 302 and the peripheral device 304. The handshake packet(s) may be exchanged via the UWB devices 308, or via another wireless link 125 (such as one or more of the wireless links 125 described above). Following pairing, the first device 302 and peripheral device(s) 304 may be configured to transmit, receive, or otherwise exchange UWB data or UWB signals using the respective UWB devices 308 on the first device 302 and/or peripheral device 304. In some embodiments, the first device 302 may be configured to establish a communications link with a peripheral device 304 (e.g., without any device pairing). For example, the first device 302 may be configured to detect, monitor, and/or identify peripheral devices 304 located in the environment using UWB signals received from the peripheral devices 304 within a certain distance of the first device 302, by identifying peripheral devices 304 which are connected to a shared Wi-Fi network (e.g., the same Wi-Fi network to which the first device 302 is connected), etc. In these and other embodiments, the first device 302 may be configured to transmit, send, receive, or otherwise exchange UWB data or signals with the peripheral device 304.

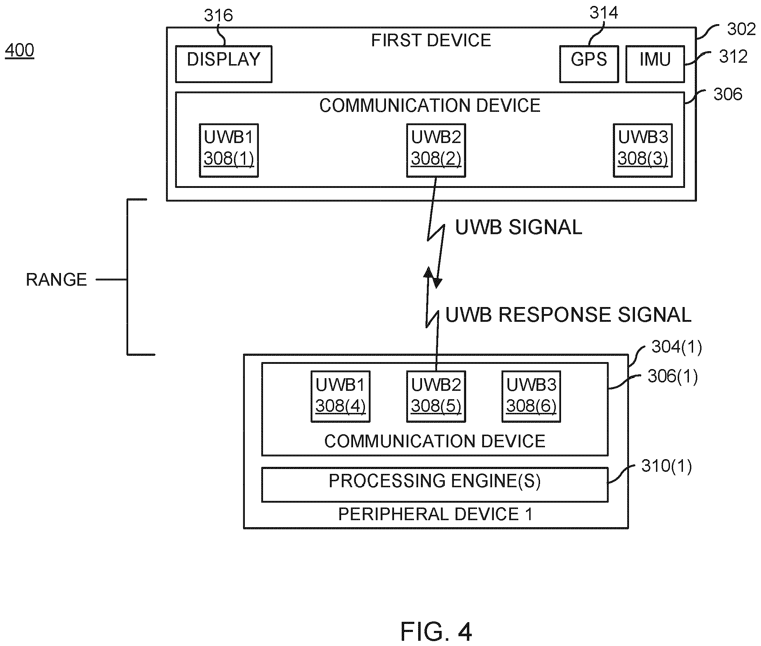

Referring now to FIG. 4, depicted is a block diagram of an environment 400 including the first device 302 and a peripheral device 304. The first device 302 and/or the peripheral device 304 may be configured to determine a range (e.g., a spatial distance, separation) between the devices 302, 304. The first device 302 may be configured to send, broadcast, or otherwise transmit a UWB signal (e.g., a challenge signal). The first device 302 may transmit the UWB signal using one of the UWB devices 308 of the communication device 306 on the first device 302. The UWB device 308 may transmit the UWB signal in the UWB spectrum. The UWB signal may have a high bandwidth (e.g., 500 MHz). As such, the UWB device 308 may be configured to transmit the UWB signal in the UWB spectrum (e.g., between 3.1 GHz and 10.6 GHz) and having a high bandwidth (e.g., 500 MHz). The UWB signal from the first device 302 may be detectable by other devices within a certain range of the first device 302 (e.g., devices having a line of sight (LOS) within 200m of the first device 302). As such, the UWB signal may be more accurate for detecting range between devices than other types of signals or ranging technology.

The peripheral device 304 may be configured to receive or otherwise detect the UWB signal from the first device 302. The peripheral device 304 may be configured to receive the UWB signal from the first device 302 via one of the UWB devices 308 on the peripheral device 304. The peripheral device 304 may be configured to broadcast, send, or otherwise transmit a UWB response signal responsive to detecting the UWB signal from the first device 302. The peripheral device 304 may be configured to transmit the UWB response signal using one of the UWB devices 308 of the communication device 306 on the peripheral device 304. The UWB response signal may be similar to the UWB signal sent from the first device 302.

The first device 302 may be configured to detect, compute, calculate, or otherwise determine a time of flight (TOF) based on the UWB signal and the UWB response signal. The TOF may be a time or duration between a time in which a signal (e.g., the UWB signal) is transmitted by the first device 302 and a time in which the signal is received by the peripheral device 304. The first device 302 and/or the peripheral device 304 may be configured to determine the TOF based on timestamps corresponding to the UWB signal. For example, the first device 302 and/or peripheral device 304 may be configured to exchange transmit and receive timestamps based on when the first device 302 transmits the UWB signal (a first TX timestamp), when the peripheral device receives the UWB signal (e.g., a first RX timestamp), when the peripheral device sends the UWB response signal (e.g., a second TX timestamp), and when the first device 302 receives the UWB response signal (e.g., a second RX timestamp). The first device 302 and/or the peripheral device 304 may be configured to determine the TOF based on a first time in which the first device 302 sent the UWB signal and a second time in which the first device 302 received the UWB response signal (e.g., from the peripheral device 304), as indicated by first and second TX and RX timestamps identified above. The first device 302 may be configured to determine or calculate the TOF between the first device 302 and the peripheral device 304 based on a difference between the first time and the second time (e.g., divided by two).

In some embodiments, the first device 302 may be configured to determine the range (or distance) between the first device 302 and the peripheral device 304 based on the TOF. For example, the first device 302 may be configured to compute the range or distance between the first device 302 and the peripheral device 304 by multiplying the TOF and the speed of light (e.g., TOF × c). In some embodiments, the peripheral device 304 (or another device in the environment 400) may be configured to compute the range or distance between the first device 302 and peripheral device 304. For example, the first device 302 may be configured to transmit, send, or otherwise provide the TOF to the peripheral device 304 (or other device), and the peripheral device 304 (or other device) may be configured to compute the range between the first device 302 and peripheral device 304 based on the TOF, as described above.

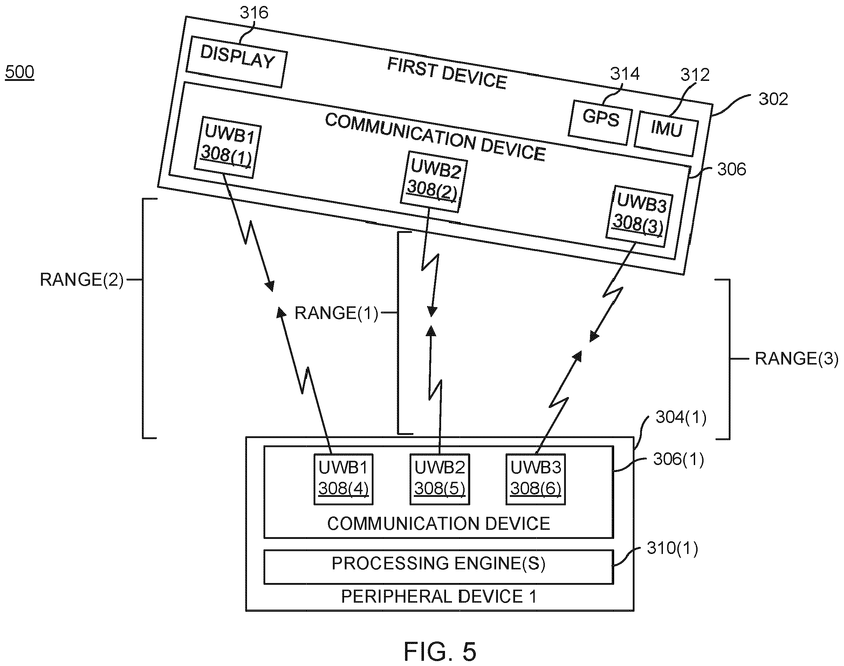

Referring now to FIG. 5, depicted is a block diagram of an environment 500 including the first device 302 and a peripheral device 304. In some embodiments, the first device 302 and/or the peripheral device 304 may be configured to determine a position or pose (e.g., orientation) of the first device 302 relative to the peripheral device 304. The first device 302 and/or the peripheral device 304 may be configured to determine the relative position or orientation in a manner similar to determining the range as described above. For example, the first device 302 and/or the peripheral device 304 may be configured to determine a plurality of ranges (e.g., range(1), range(2), and range(3)) between the respective UWB devices 308 of the first device 302 and the peripheral device 304. In the environment 500 of FIG. 5, the first device 302 is positioned or oriented at an angle relative to the peripheral device 304. The first device 302 may be configured to compute the first range (range(1)) between central UWB devices 308(2), 308(5) of the first and peripheral device 304. The first range may be an absolute range or distance between the devices 302, 304, and may be computed as described above with respect to FIG. 4.

The first device 302 and/or the peripheral device 304 may be configured to compute the second range(2) and third range(3) similar to computing the range(1), In some embodiments, the first device 302 and/or the peripheral device 304 may be configured to determine additional ranges, such as a range between UWB device 308(1) of the first device 302 and UWB device 308(5) of the peripheral device 304, a range between UWB device 308(2) of the first device 302 and UWB device 308(6) of the peripheral device 304, and so forth. While described above as determining a range based on additional UWB signals, it is noted that, in some embodiments, the first device 302 and/or the peripheral device 304 may be configured to determine a phase difference between a UWB signal received at a first UWB device 308 and a second UWB device 308 (i.e., the same UWB signal received at separate UWB devices 308 on the same device 302, 304). The first device 302 and/or the peripheral device 304 may be configured to use each or a subset of the computed ranges (or phase differences) to determine the pose, position, orientation, etc. of the first device 302 relative to the peripheral device 304. For example, the first device and/or the peripheral device 304 may be configured to use one of the ranges relative to the first range(1) (or phase differences) to determine a yaw of the first device 302 relative to the peripheral device 304, another one of the ranges relative to the first range(1) (or phase differences) to determine a pitch of the first device 302 relative to the peripheral device 304, another one of the ranges relative to the first range(1) (or phase differences) to determine a roll of the first device 302 relative to the peripheral device 304, and so forth.

By using the UWB devices 308 at the first device 302 and peripheral devices 304, the range and pose may be determined with greater accuracy than other ranging / wireless link technologies. For example, the range may be determined within a granularity or range of +/- 0.1 meters, and the pose/orientation may be determined within a granularity or range of +/- 5 degrees.

Referring to FIG. 3 - FIG. 5, in some embodiments, the first device 302 may include various sensors and/or sensing systems. For example, the first device 302 may include an inertial measurement unit (IMU) sensor 312, global positioning system (GPS) 314, etc. The sensors and/or sensing systems, such as the IMU sensor 312 and/or GPS 314 may be configured to generate data corresponding to the first device 302. For example, the IMU sensor 312 may be configured to generate data corresponding to an absolute position and/or pose of the first device 302. Similarly, the GPS 314 may be configured to generate data corresponding to an absolute location/position of the first device 302. The data from the IMU sensor 312 and/or GPS 314 may be used in conjunction with the ranging / position data determined via the UWB devices 308 as described above. In some embodiments, the first device 302 may include a display 316. The display 316 may be integrated or otherwise incorporated in the first device 302. In some embodiments, the display 316 may be separate or remote from the first device 302. The display 316 may be configured to display, render, or otherwise provide visual information to a user or wearer of the first device 302, which may be rendered at least in part on the ranging / position data of the first device 302.

One or more of the devices 302, 304 may include various processing engine(s) 310. As noted above, the processing engine(s) 310 may be or include any device, component, machine, or combination of hardware and software designed or implemented to control the devices 302, 304 based on UWB signals transmitted and/or received by the respective UWB devices 308. In some embodiments, the processing engine(s) 310 may be configured to compute or otherwise determine the ranges / positions of the first device 302 relative to the peripheral devices 304 as described above. In some embodiments, the processing engines 310 may be located or embodied on another device in the environment 300-500 (such as at the access point 105 as described above with respect to FIG. 1). As such, the first device 302 and/or peripheral devices 304 may be configured to off-load computation to another device in the environment 300-500 (such as the access point 105). In some embodiments, the processing engines 310 may be configured to perform various functions and computations relating to radio transmissions and scheduling (e.g., via the UWB devices 308 and/or other communication interface components), compute or otherwise determine range and relative position of the devices 302, 304, manage data exchanged between the devices 302, 304, interface with external components (such as hardware components in the environment 300-500, external software or applications, etc.), and the like. Various examples of functions and computations which may be performed by the processing engine(s) 310 are described in greater detail below.

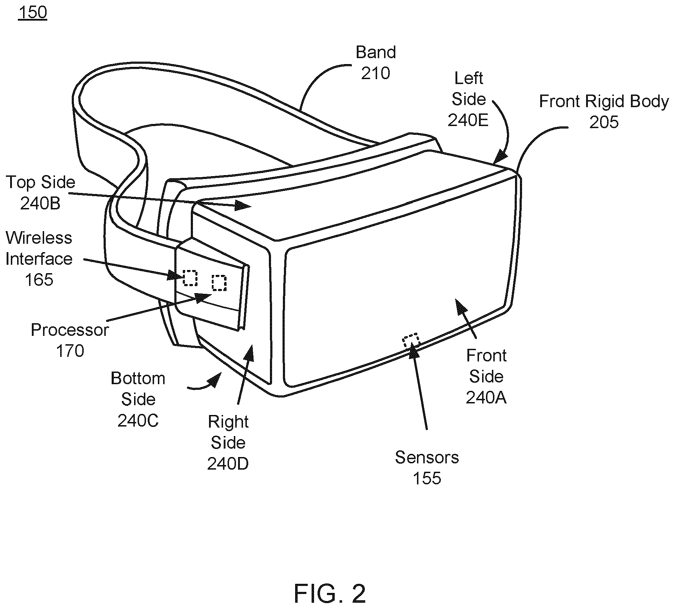

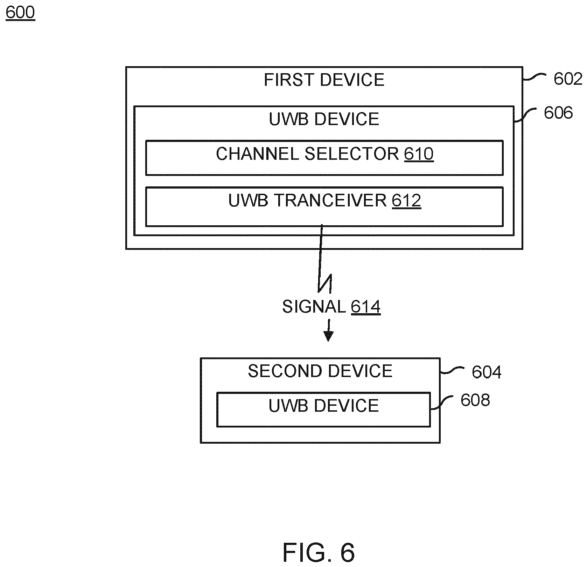

Referring now to FIG. 6, depicted is a block diagram of a system 600 for ultra-wideband (UWB) frequency band allocation, according to an example implementation of the present disclosure. The system 600 may include a first device 602 and a second device 604. The first device 602 and second device 604 may be similar to the computing device 110 and HWD 150 described above with reference to FIG. 1 - FIG. 2, and/or the devices 302, 304 described above with reference to FIG. 3 - FIG. 5. For example, the first device 602 may be or include a HWD (similar to the HWD 150) and the second device 604 may be or include a computing device (similar to the computing device 110). The first device 602 and second device 604 may include respective UWB devices 606, 608. The UWB devices 606, 608 may be similar in some aspects to the communication device 306 described above with reference to FIG. 3 - FIG. 5. The UWB devices 606, 608 may include a channel selector 610 and a UWB transceiver 612. As described in greater detail below, the channel selector 610 may be configured to select a channel upon which to establish a connection (e.g., via the UWB transceiver 612) between the respective devices 602, 604. The UWB transceiver 612 may be configured to establish the connection on the channel, and can transmit various signals 614 between the respective devices 602, 604 via the connection on the channel. While the channel selector 610 and UWB transceiver 612 are shown as being included on the UWB device 606 of the first device 602, it should be understood that the UWB device 608 of the second device 604 may include similar hardware / components / elements provided thereon.

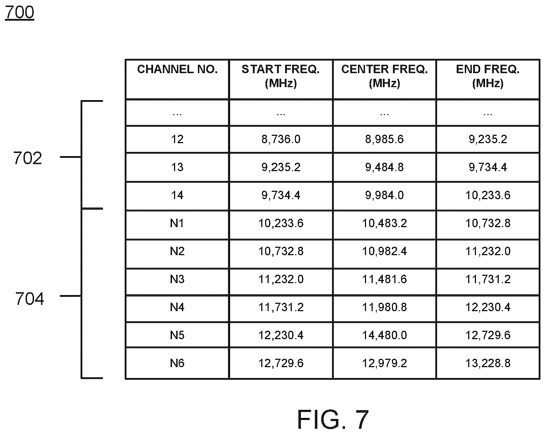

The UWB device 606 may include a channel selector 610. The channel selector 610 may be or include any device, component, element, or hardware designed or configured to determine, identify, choose, pick, elect, or otherwise select a channel upon which to establish a connection between the first device 602 and second device 604 (e.g., between UWB transceivers 612 of the respective devices 602, 604). The connection may be a UWB connection (e.g., a connection in the UWB spectrum). The channel selector 610 may be configured to perform a scanning and assessment of available UWB channels, to select which channel upon which to establish the connection. The channel selector 610 may be configured to perform a scanning and assessment of available channels from one of the plurality of channels described in greater detail below with reference to FIG. 7 - FIG. 10. The UWB device 606 may include a UWB transceiver 612. The UWB transceiver 612 may be or include any device, component, element, antenna, or hardware designed or configured to establish and communicate (e.g., transmit / receive) signals in the UWB spectrum. The UWB transceiver 612 may be similar to the UWB devices 308 described above with reference to FIG. 3 - FIG. 5.

Referring now to FIG. 7 together with FIG. 6, depicted is a table 700 showing example channels in the UWB spectrum, according to an example implementation of the present disclosure. As shown in the table 700, the UWB spectrum may include a first set of channels 702 (e.g., channel 1 - channel 14) ranging between 3.1 GHz and 10,233.6 GHz, and a second set of channels 704. The second set of channels 704 may include six channels (e.g., the first channel 704(1) - a sixth channel 704(6) (shown as N1 through N6 in FIG. 7)).

Each of the channels 702, 704 may have a channel width (or bandwidth) of approximately 500 MHz (or 499.2 MHz). In an implementation represented in FIG. 7, the second set of channels 704 may be established, defined, or otherwise set in the UWB spectrum adjacent the first set of channels 702. For example, the second set of channels 704 may include a first channel 704(1) (shown as N1 in FIG. 7), which has a start frequency at 10,233.6 GHz (which is also the end frequency of channel 14 702(14)). As such, the first channel 704(1) may have a start frequency at 10,233.6 MHz and an end frequency at 10,732.8 MHz. The second channel 704(2) may have a start frequency at 10,732.8 MHz and an end frequency at 11,232.0 MHz. The third channel 704(3) may have a start frequency at 11,232.0 MHz and an end frequency at 11,731.2 MHz. The fourth channel 704(4) may have a start frequency at 11,731.2 MHz and an end frequency at 12,230.4 MHz. The fifth channel 704(5) may have a start frequency at 12,230.4 MHz and an end frequency 12,729.6 MHz. The sixth channel 704(6) may have a start frequency at 12,729.6 MHz and an end frequency at 13,228.8 MHz. In this regard, each of the first through sixth channels may have a channel width (or bandwidth) of 499.2 MHz (e.g., a difference between the respective start and end frequencies).

The second set of channels 704 may have a center frequency defined at a frequency halfway between the start and end frequencies of the respective channel 704. For example, the first channel 704(1) may have a center frequency at 10,483.2 MHz. The second channel 704(2) may have a center frequency at 10,982.4 MHz. The third channel 704(3) may have a center frequency at 11,481.6 MHz. The fourth channel 704(4) may have a fourth center frequency at 11,980.8 MHz. The fifth channel 704(5) may have a fifth center frequency at 12,490.0 MHz. The sixth channel 704(6) may have a sixth center frequency at 12,979.2 MHz. As such, each center frequency may be defined or set at a halfway point between the starting and ending frequencies of the respective channels 704.

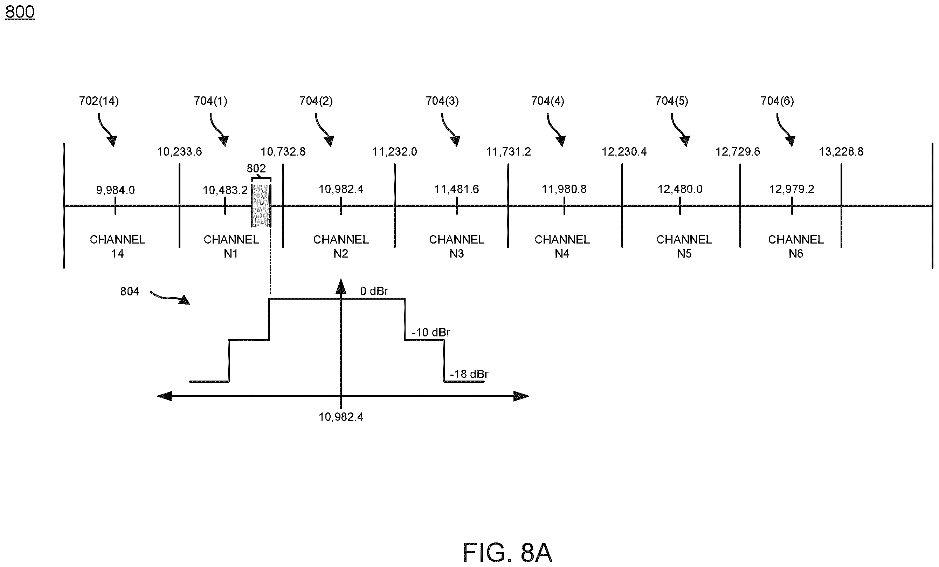

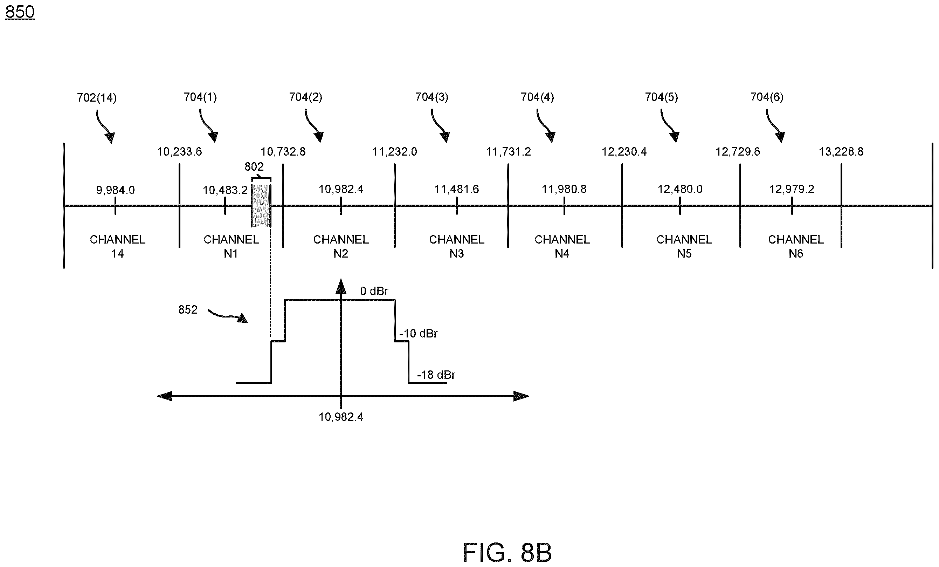

Referring now to FIG. 8A and FIG. 8B, depicted are channel diagrams 800, 850 corresponding to the table 700, according to an example implementation of the present disclosure. In various implementations, the UWB spectrum may include a passive band 802 residing therein. The passive band 802 may be a frequency band which is used for various radio astronomy observations. The passive band 802 may span between 10.6 and 10.7 GHz. The passive band 802 may be reserved for receiving signals from various celestial sources or otherwise conducting resource in radio astronomy. As such, the passive band 802 may be regulated such that signals from active transmitters and communication systems outside of the passive band 802 are attenuated to below a threshold, so as to not provide interference in the passive band 802.

As shown in FIG. 8A, for devices transmitting signals on the channels 702, 704, the signals may be transmitted and attenuated according to a power spectral density (PSD) mask 804. The PSD mask 802 may set or define limits on the PSD of signals sent across outer boundaries of the frequency band of the corresponding channel 702, 704. The PSD mask 804 may be achieved by the device, through various filters (or filtering technology), beamforming techniques, antenna design / optimization / dimensions, matching networks, and so forth, of the UWB transceiver 612. The PSD mask 804 may set or define a maximum allowed power level at various frequencies or frequency ranges. For example, as shown in FIG. 8A, the PSD mask 804 may define a maximum power level at a first frequency range (e.g., 0 dBr across the bandwidth of the channel), a -10dBr reduction in signal power outside of the first frequency range, and a -18 dBr reduction in signal power outside of the second frequency range. By providing the PSD mask 802, interference across adjacent or nearby channels can be limited.

Referring to FIG. 6 and FIG. 8A, the passive band 802 may reside within the first channel 704(1). Because the passive band 802 resides within the first channel 704(1), the channel selector 610 may forego selection of the first channel 704(1) due to restrictions of signals being transmitted in the passive band 802. Additionally, as shown in FIG. 8A, given the PSD mask 802, signals transmitted on the second channel 704(2) may not be attenuated sufficiently within the passive band 802 (e.g., with a -10 dBr reduction in signal power of signals sent on the second channel 704(2) across the passive band 802). In this implementation, the channel selector 610 may also forego selecting the second channel 704(2) due to signals sent on the second channel 704(2) not having a sufficient reduction in power at the passive band 802. In this regard, the remaining channels from which the channel selector 610 can select a channel upon which to establish the connection may be the third channel 704(3) through the sixth channel 704(6). In various embodiments, as shown in FIG. 8B, to the extent that the UWB transceiver 612 implements a more stringent PSD mask 852 shown in FIG. 8B, signals sent on a channel 704 may have a power which is reduced to below a threshold (e.g., a -18 dBr reduction from the reference power of the signal sent on the respective channel 704). In this example, the channel selector 610 may be configured to select the channel from among the second through sixth channels 704(2)-704(6), as signals sent on the second channel 704(2) may be sufficiently attenuated at the outermost frequency (or trailing edge) of the passive band 802 as shown in FIG. 8B.

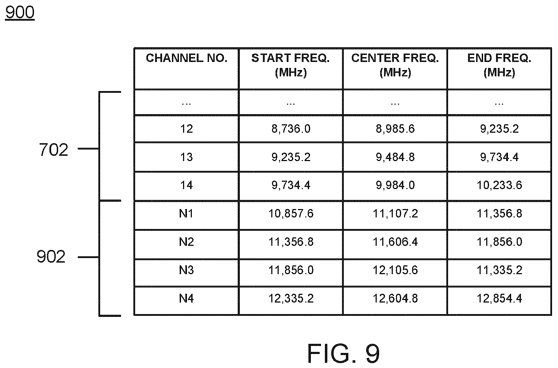

Referring now to FIG. 9 together with FIG. 6, depicted is another table 900 showing example channels in the UWB spectrum, according to another example implementation of the present disclosure. As shown in the table 900, the UWB spectrum may include the same first set of channels 702 (e.g., channel 1 - channel 14) ranging between 3.1 GHz and 10,233.6 GHz. In the example channels of FIG. 9, the UWB spectrum may include a second set of channels 902. The second set of channels 902 may include four channels (e.g., the first channel 902(1) - a fourth channel 704(4) (shown as N1 through N4 in FIG. 7)). Similar to the embodiment shown in FIG. 7, each of the channels 702, 902 may have a channel width (or bandwidth) of approximately 500 MHz (or 499.2 MHz).

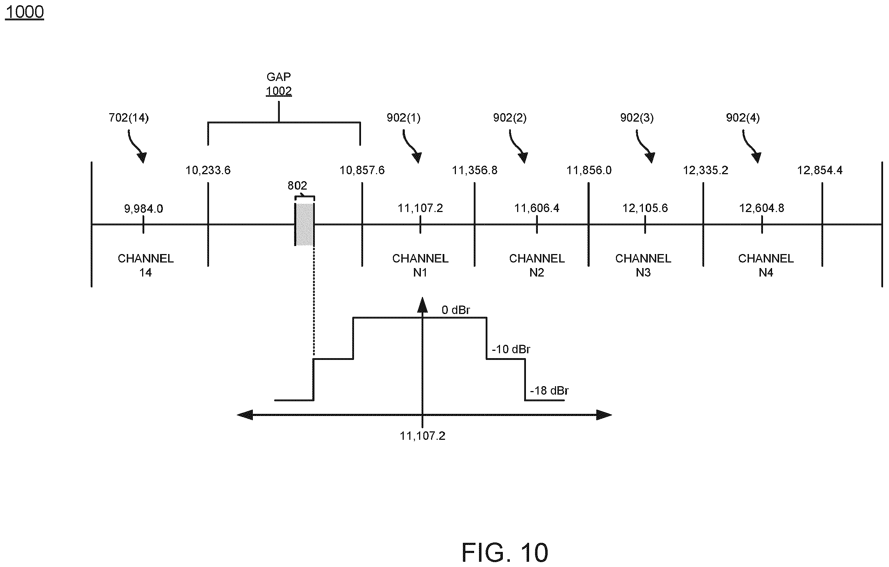

Referring to FIG. 9 and FIG. 10, the second set of channels 902 may be established, defined, or otherwise set in the UWB spectrum offset from the first set of channels 702. In particular, FIG. 10 depicts a channel diagram 1000 corresponding to the table 900. The second set of channels 902 may be set in the UWB spectrum at a gap 1002 defined, established, or otherwise provided between channel 14 702(14) of the first set of channels 702 and the first channel 902(1) of the second set of channels 902. In some embodiments, the gap 1002 may be equal to a multiple of the bandwidth or channel width of the channels 702, 902. For example, the multiple may be 1.25 times of the bandwidth (e.g., 1.25 × 499.2 MHz, or 624 MHz). While this example multiple is described, various other multiples may be used for defining various other gaps 1002. By defining the gap 1002 between channel 14 702(14) and the first channel 902(1), signals sent on either channel 14 702(14) and/or the first channel 902(1) having the PSD mask 804, would have a sufficient reduction in power at the passive band 802. As such, each of the second set of channels 902 may be selectable by the channel selector 610 for establishing the connection with the second device 604.

Referring back to FIG. 6, the channel selector 610 may be configured to select a channel from the plurality of second channels 704, 902 on which to establish the connection. The channel selector 610 may be configured to perform a scan of available channels. In some embodiments, the channel selector 610 may be configured to perform the scan by listening (e.g., via the UWB transceiver 612) on different available channels 704, 902, to measure, detect, or otherwise identify any traffic / signals / communication on the channels. The channel selector 610 may be configured to determine, for each or a subset of the channels, various factors for assessing conditions of the respective channels. For example, the channel selector 610 may be configured to determine signal strength of signals identified / detected / received by the UWB transceiver 612 on the channels, noise levels or interference levels on the channels, etc. The channel selector 610 may be configured to select, based on the conditions of the respective channels, one of the plurality of channels upon which to establish the connection with the second device 604. The channel selector 610 may be configured to select a channel based on which channel has, for example, the lowest signal strength (e.g., received signal strength indicator (RSSI), received signal reference power (RSRP), etc.) of any signals identified on the channel, lowest interference / noise levels, etc.

The UWB transceiver 612 may be configured to establish a connection on the selected channel with the UWB device 608 of the second device 604 (e.g., with a UWB transceiver of the UWB device 608). In some embodiments, the UWB transceiver 612 may be configured to communicate, push, broadcast, send, provide, or otherwise transmit a synchronization or control signal on the selected channel to the UWB device 608. The synchronization or control signal may establish, set, or otherwise define various parameters of the connection on the channel (e.g., modulation and coding (MCS) scheme, data symbol structure, data rates, etc.). The UWB device 608, upon receiving the control signal on the selected channel, may generate a response accepting (or renegotiating) the various parameters of the connection. The UWB device 608 may be configured to transmit the response back to the UWB device 606. The UWB devices 606, 608 may be configured to establish the connection based on or according to the synchronization or control signal and response. The UWB transceiver 612 may be configured to transmit (and correspondingly receive) various signals 614 on the channel responsive to establishing the connection on the channel. For example, the UWB transceiver 612 may be configured to transmit sensing signals 614, ranging or measurement signals 614, data signals 614, or any other type or form of signals as described above with reference to FIG. 3 - FIG. 5.

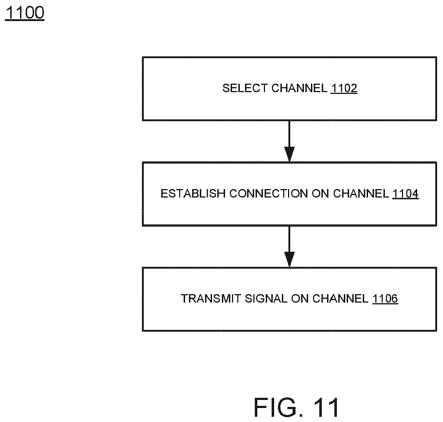

Referring now to FIG. 11, depicted is a flowchart showing an example method 1100 of UWB frequency band allocation, according to an example implementation of the present disclosure. The method 1100 may be performed or executed by the devices, components, elements, or hardware described above with reference to FIG. 1 - FIG. 10 (such as the first device 602, the UWB device 606, and/or UWB transceiver 612). As a brief overview, at step 1102, a first ultra-wideband (UWB) device selects a channel. At step 1104, the first UWB device establishes a connection on the channel. At step 1106, the first UWB device transmits a signal on the channel.

At step 1102, a first ultra-wideband (UWB) device selects a channel. In some embodiments, the first UWB device may select/determine/identify a channel from a plurality of available channels in the UWB spectrum. The first UWB device may select a channel responsive to determining to establish a connection with a second UWB device. The first UWB device may determine to establish the connection, for example responsive to an application launching on the first UWB device or on a device supported by the first UWB device, responsive to the first and second UWB device being paired and within a predetermined range of one another, responsive to receiving a request from a user of the first UWB device to establish the connection, etc.

In some embodiments, the first UWB device may select the channel from a plurality of channels having a center frequency at or above 10.6 GHz. For example, the plurality of channels may include any one or more of the channels 704(1)-704(6) of FIG. 7, the channels 902(1)-902(4) of FIG. 9, etc. The first UWB device may select the channel responsive to sensing a channel condition of one or more of the plurality of channels. For example, the first UWB device may sense or measure and/or determine various channel conditions including signal strength (e.g., received signal strength indicator (RSSI), received signal reference power (RSRP), etc.) of any signals identified on the channel, interference, noise, etc. on the channel. In some embodiments, the first UWB device may sense or measure channel conditions until identifying a channel which has channel conditions that satisfy one or more thresholds (e.g., signal strength below a threshold, interference below a threshold, etc.). In some embodiments, the first UWB device may sense or measure channel conditions of each of the plurality of channels and may select a channel based on a comparison of each of the channel conditions.

At step 1104, the first UWB device establishes a connection on the channel. In some embodiments, the first UWB device may establish a connection with the second UWB device on the channel. As described above, the channel may have a center frequency at or above 10.6 GHz. For example, the channel may be or include any one or more of the channels 704(2)-704(6) and/or channels 902(1)-902(4). The first UWB device may establish the connection responsive to selecting the channel at step 1102. The first UWB device may establish the connection by transmitting a control or synchronization signal to the second UWB device on the selected channel. The control or synchronization signal may include various parameters or configuration settings for the connection on the channel, for use in communicating on the channel between the devices. The second UWB device may listen on the channel, and can receive the control or synchronization signal from the UWB first device. The second UWB device may generate and/or transmit a response to the first UWB device, which accepts / renegotiates / declines the various parameters and configuration settings. The first UWB device and second UWB device may establish the connection on the channel responsive to the signal and response exchanged between the devices.

At step 1106, the first UWB device transmits a signal on the channel. In some embodiments, the first UWB device transmits a signal to the second UWB device via the connection on the channel. The first UWB device may transmit various signals on or via the connection responsive to establishing the connection at step 1104. The first UWB device may transmit, for example, ranging signals, measurement signals, data signals, etc. The first UWB device may transmit such signals at various intervals (e.g., according to the parameters and configuration settings for the connection). The first UWB device may transmit the signals according to a schedule, on demand, etc. In some embodiments, the first UWB device may hop to or switch to a different channel responsive to various conditions. For example, the first UWB device may repeat steps 1102 - 1106 responsive to detecting or identifying a decline in channel conditions of the current channel being used for the connection (e.g., increased interference or noise from signals sent on neighboring channels, as one example).

The first UWB device may transmit such signals for the duration in which the connection is maintained between the devices on the channel. The first UWB device may terminate the connection on the channel (e.g., responsive to the devices no longer being within range of one another, responsive to receiving a request to disable / deactivate / disconnect the connection, responsive to the first UWB device being turned off or entering a sleep mode, and so forth). The first UWB device may terminate the connection by sending a terminate signal which terminates or cancels the connection.

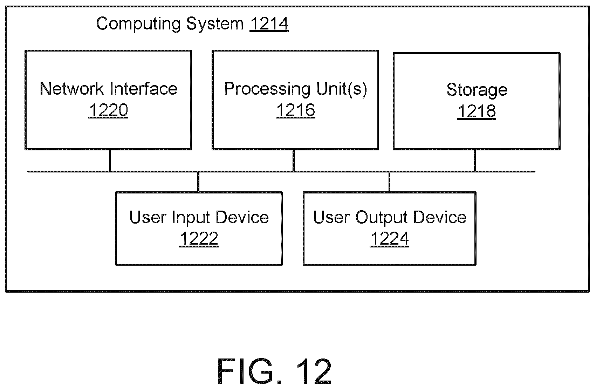

Various operations described herein can be implemented on computer systems. FIG. 12 shows a block diagram of a representative computing system 1214 usable to implement the present disclosure. In some embodiments, the computing device 110, the HWD 150, devices 302, 304, or each of the components of FIG. 1-6 are implemented by or may otherwise include one or more components of the computing system 1214. Computing system 1214 can be implemented, for example, as a consumer device such as a smartphone, other mobile phone, tablet computer, wearable computing device (e.g., smart watch, eyeglasses, head wearable display), desktop computer, laptop computer, or implemented with distributed computing devices. The computing system 1214 can be implemented to provide VR, AR, MR experience. In some embodiments, the computing system 1214 can include conventional computer components such as processors 1216, storage device 1218, network interface 1220, user input device 1222, and user output device 1224.

Network interface 1220 can provide a connection to a wide area network (e.g., the Internet) to which WAN interface of a remote server system is also connected. Network interface 1220 can include a wired interface (e.g., Ethernet) and/or a wireless interface implementing various RF data communication standards such as Wi-Fi, Bluetooth, UWB, or cellular data network standards (e.g., 3G, 4G, 5G, 60 GHz, LTE, etc.).

User input device 1222 can include any device (or devices) via which a user can provide signals to computing system 1214; computing system 1214 can interpret the signals as indicative of particular user requests or information. User input device 1222 can include any or all of a keyboard, touch pad, touch screen, mouse or other pointing device, scroll wheel, click wheel, dial, button, switch, keypad, microphone, sensors (e.g., a motion sensor, an eye tracking sensor, etc.), and so on.

User output device 1224 can include any device via which computing system 1214 can provide information to a user. For example, user output device 1224 can include a display to display images generated by or delivered to computing system 1214. The display can incorporate various image generation technologies, e.g., a liquid crystal display (LCD), light-emitting diode (LED) including organic light-emitting diodes (OLED), projection system, cathode ray tube (CRT), or the like, together with supporting electronics (e.g., digital-to-analog or analog-to-digital converters, signal processors, or the like). A device such as a touchscreen that function as both input and output device can be used. Output devices 1224 can be provided in addition to or instead of a display. Examples include indicator lights, speakers, tactile "display" devices, printers, and so on.

Some implementations include electronic components, such as microprocessors, storage and memory that store computer program instructions in a computer readable storage medium (e.g., non-transitory computer readable medium). Many of the features described in this specification can be implemented as processes that are specified as a set of program instructions encoded on a computer readable storage medium. When these program instructions are executed by one or more processors, they cause the processors to perform various operation indicated in the program instructions. Examples of program instructions or computer code include machine code, such as is produced by a compiler, and files including higher-level code that are executed by a computer, an electronic component, or a microprocessor using an interpreter. Through suitable programming, processor 1216 can provide various functionality for computing system 1214, including any of the functionality described herein as being performed by a server or client, or other functionality associated with message management services.

It will be appreciated that computing system 1214 is illustrative and that variations and modifications are possible. Computer systems used in connection with the present disclosure can have other capabilities not specifically described here. Further, while computing system 1214 is described with reference to particular blocks, it is to be understood that these blocks are defined for convenience of description and are not intended to imply a particular physical arrangement of component parts. For instance, different blocks can be located in the same facility, in the same server rack, or on the same motherboard. Further, the blocks need not correspond to physically distinct components. Blocks can be configured to perform various operations, e.g., by programming a processor or providing appropriate control circuitry, and various blocks might or might not be reconfigurable depending on how the initial configuration is obtained. Implementations of the present disclosure can be realized in a variety of apparatus including electronic devices implemented using any combination of circuitry and software.

Having now described some illustrative implementations, it is apparent that the foregoing is illustrative and not limiting, having been presented by way of example. In particular, although many of the examples presented herein involve specific combinations of method acts or system elements, those acts and those elements can be combined in other ways to accomplish the same objectives. Acts, elements and features discussed in connection with one implementation are not intended to be excluded from a similar role in other implementations or implementations.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present disclosure. The memory may be or include volatile memory or nonvolatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit and/or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

The phraseology and terminology used herein is for the purpose of description and should not be regarded as limiting. The use of "including" "comprising" "having" "containing" "involving" "characterized by" "characterized in that" and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular can also embrace implementations including a plurality of these elements, and any references in plural to any implementation or element or act herein can also embrace implementations including only a single element. References in the singular or plural form are not intended to limit the presently disclosed systems or methods, their components, acts, or elements to single or plural configurations. References to any act or element being based on any information, act or element can include implementations where the act or element is based at least in part on any information, act, or element.

Any implementation disclosed herein can be combined with any other implementation or embodiment, and references to "an implementation," "some implementations," "one implementation" or the like are not necessarily mutually exclusive and are intended to indicate that a particular feature, structure, or characteristic described in connection with the implementation can be included in at least one implementation or embodiment. Such terms as used herein are not necessarily all referring to the same implementation. Any implementation can be combined with any other implementation, inclusively or exclusively, in any manner consistent with the aspects and implementations disclosed herein.

Where technical features in the drawings, detailed description or any claim are followed by reference signs, the reference signs have been included to increase the intelligibility of the drawings, detailed description, and claims. Accordingly, neither the reference signs nor their absence have any limiting effect on the scope of any claim elements.

Systems and methods described herein may be embodied in other specific forms without departing from the characteristics thereof. References to "approximately," "about" "substantially" or other terms of degree include variations of +/-10% from the given measurement, unit, or range unless explicitly indicated otherwise. Coupled elements can be electrically, mechanically, or physically coupled with one another directly or with intervening elements. Scope of the systems and methods described herein is thus indicated by the appended claims, rather than the foregoing description, and changes that come within the meaning and range of equivalency of the claims are embraced therein.

The term "coupled" and variations thereof includes the joining of two members directly or indirectly to one another. Such joining may be stationary (e.g., permanent or fixed) or moveable (e.g., removable or releasable). Such joining may be achieved with the two members coupled directly with or to each other, with the two members coupled with each other using a separate intervening member and any additional intermediate members coupled with one another, or with the two members coupled with each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References to "or" can be construed as inclusive so that any terms described using "or" can indicate any of a single, more than one, and all of the described terms. A reference to "at least one of 'A' and 'B'" can include only 'A', only 'B', as well as both 'A' and 'B'. Such references used in conjunction with "comprising" or other open terminology can include additional items.

Modifications of described elements and acts such as variations in sizes, dimensions, structures, shapes and proportions of the various elements, values of parameters, mounting arrangements, use of materials, colors, orientations can occur without materially departing from the teachings and advantages of the subject matter disclosed herein. For example, elements shown as integrally formed can be constructed of multiple parts or elements, the position of elements can be reversed or otherwise varied, and the nature or number of discrete elements or positions can be altered or varied. Other substitutions, modifications, changes and omissions can also be made in the design, operating conditions and arrangement of the disclosed elements and operations without departing from the scope of the present disclosure.

References herein to the positions of elements (e.g., "top," "bottom," "above," "below") are merely used to describe the orientation of various elements in the FIGURES. The orientation of various elements may differ according to other exemplary embodiments, and that such variations are intended to be encompassed by the present disclosure.

## Claims

1. A method comprising:
establishing, by a first ultra-wideband (UWB) device, a connection with a second UWB device on a channel, the channel having a center frequency at or above 10.6 gigahertz (GHz); and
transmitting, by the first UWB device, a signal to the second UWB device via the connection on the channel.

2. The method of claim 1, further comprising selecting, by the first UWB device, from a plurality of channels with center frequencies between 10.6 GHz and 13.0 GHz, the channel upon which to establish the connection.

3. The method of claim 2, wherein the plurality of channels comprise at least one of:
a first channel having a first center frequency at 11,107.2 megahertz (MHz),
a second channel having a second center frequency at 11,606.4 MHz,
a third channel having a third center frequency at 12,105.6 MHz, or
a fourth channel having a fourth center frequency at 12,604.8 MHz; and optionally wherein selecting the channel from the plurality of channels comprises selecting, by the first UWB device, the first channel, the second channel, the third channel or the fourth channel.

4. The method of claim 2, wherein the plurality of channels comprise at least one of:
a first channel having a first center frequency at 10,483.2 megahertz (MHz),
a second channel having a second center frequency at 10,982.4 MHz,
a third channel having a third center frequency at 11,481.6 MHz,
a fourth channel having a fourth center frequency at 11,980.8 MHz,
a fifth channel having a fifth center frequency at 12,490.0 MHz, and
a sixth channel having a sixth center frequency at 12,979.2 MHz; and optionally selecting the channel from the plurality of channels comprises selecting, by the first UWB device, the second channel, the third channel, the fourth channel, the fifth channel or the sixth channel.

5. The method of claim 4 or 5, wherein a passive band resides within the first channel such that the first channel is inaccessible for establishing a connection thereon.

6. The method of claim 5, further comprising selecting, by the first UWB device, the second channel according to the first UWB device attenuating signals sent on the second channel, to below a threshold at the passive band.

7. The method of claim 2, wherein each channel of the plurality of channels has a channel width, between a respective pair of start and end frequencies, of 499.2 megahertz.

8. An ultra-wideband (UWB) device comprising:
one or more UWB transceivers configured to:
establish a connection with a second UWB device on a channel, the channel having a center frequency at or above 10.6 gigahertz (GHz); and
transmit a signal to the second UWB device via the connection on the channel.

9. The UWB device of claim 8, wherein the one or more UWB transceivers are configured to select, from a plurality of channels with center frequencies between 10.6 GHz and 13.0 GHz, the channel upon which to establish the connection.

10. The UWB device of claim 9, wherein the plurality of channels comprise at least one of:
a first channel having a first center frequency at 11,107.2 megahertz (MHz),
a second channel having a second center frequency at 11,606.4 MHz,
a third channel having a third center frequency at 12,105.6 MHz, or
a fourth channel having a fourth center frequency at 12,604.8 MHz; and optionally wherein the UWB transceiver is configured to select the channel by selecting the first channel, the second channel, the third channel or the fourth channel.

11. The UWB device of claim 9, wherein the plurality of channels comprise at least one of:
a first channel having a first center frequency at 10,483.2 megahertz (MHz),
a second channel having a second center frequency at 10,982.4 MHz,
a third channel having a third center frequency at 11,481.6 MHz,
a fourth channel having a fourth center frequency at 11,980.8 MHz,
a fifth channel having a fifth center frequency at 12,490.0 MHz, or
a sixth channel having a sixth center frequency at 12,979.2 MHz; and optionally wherein the UWB transceiver is configured to select the channel by selecting the second channel, the third channel, the fourth channel, the fifth channel or sixth channel.

12. The UWB device of claim 10 or 11, wherein a passive band resides within the first channel such that the first channel is inaccessible for establishing a connection thereon.

13. The UWB device of claim 12, wherein the UWB transceiver is configured to select the second channel according to one or more filters of the first UWB device attenuating signals sent on the second channel to below a threshold at the passive band.

14. The UWB device of claim 9, wherein each channel of the plurality of channels has a channel width, between a respective pair of start and end frequencies, of 499.2 megahertz.

15. A device comprising:
a first ultra-wideband (UWB) transceiver configured to:
establish a connection with a second UWB transceiver of a second device on a channel, the channel having a center frequency at or above 10.6 gigahertz (GHz); and
transmit a signal to the second UWB transceiver via the connection on the channel;
and optionally wherein the first UWB transceiver is configured to select, from a plurality of channels with center frequencies between 10.6 GHz and 13.0 GHz, the channel upon which to establish the connection.
